# EUROPEAN PATENT APPLICATION

(11) **EP 2 277 767 A1**
(43) Date of publication of application: **26.01.2011**
(21) Application number: 09166416.9
(22) Date of filing: 25.07.2009
(51) Int. Cl.: B62H 1/04

(54) **Kickstand device for two-wheeled vehicle**

(71) Applicant: Lin, Tzu-Tang, Taipei (TW)
(72) Inventor: Lin, Tzu-Tang, Taipei (TW)
(74) Representative: Gee, Steven William

(57) **Abstract**

A kickstand device includes a main frame (10) mounted to a frame of a two-wheeled vehicle and two kickstands (30) each having a first end and a second end. The first ends of the kickstands are respectively mounted to two ends of a pivotal rod (13) to move therewith. The kickstands (30) are located on opposite sides of the two-wheeled vehicle. The pivotal rod (13) is pivotable relative to the main frame, allowing the kickstands (30) to jointly pivot about a rotating axis. The second end of at least one of the kickstands has an adjustable spacing to the rotating axis of the pivotal rod (13) in a direction perpendicular to the rotating axis.

## Description

### BACKGROUND OF THE INVENTION

The present invention relates to a kickstand device and, more particularly, to a kickstand device for preventing a two-wheeled vehicle from falling sideward.

It is known to provide a two-wheeled vehicle such as a motorcycle or a bicycle with a kickstand to keep the two-wheeled vehicle upright when not in use. The kickstand is in the form of side stand type having a single leg or of a center stand type having a pair of legs or a bracket. The side stand kickstand is mounted to a side of a two-wheeled vehicle to support the two-wheeled vehicle from the side for parking purposes while allowing easy, force-saving operation. However, the risk of falling of the two-wheeled vehicle from the other side still exists. The center stand kickstand provides support for both sides of a two-wheeled vehicle. In an application on a motorcycle, two legs are respectively and pivotably mounted to two sides of the motorcycle. However, independent operation of the legs is required. Furthermore, the motorcycle can not be reliably supported on a rugged or inclined surface. Further, kickstands suitable for motorcycles may not be suitable for bicycles, and vice versa.

Thus, a need exists for a kickstand device for reliably supporting a two-wheeled vehicle even on an uneven surface while allowing easy operation of the kickstand device.

### BRIEF SUMMARY OF THE INVENTION

A kickstand device for a two-wheeled vehicle according to the preferred teachings of the present invention includes a main frame adapted to be mounted to a frame of the two-wheeled vehicle and two kickstands each having a first end and a second end. The first ends of the kickstands are respectively mounted to two ends of a pivotal rod to move therewith. The kickstands are adapted to be located on opposite sides of the two-wheeled vehicle. The kickstand device further includes means for rotatably supporting the pivotal rod relative to the main frame and allowing the kickstands to jointly pivot about a rotating axis between a first position and a second position. The second ends of the kickstands are in contact with a surface on which the two-wheeled vehicle is located when the kickstands are in the first position. The second ends of the kickstands are spaced from the surface when the kickstands are in the second position. The pivotal rod pivots relative to the main frame when the kickstands pivot between the first and second positions. The second end of at least one of the kickstands has an adjustable spacing to the rotating axis of the pivotal rod in a direction perpendicular to the rotating axis. The kickstands are biased to the second position by an elastic element.

In a preferred embodiment, the pivotal rod is rotatably received in an outer tube. The outer tube includes an outer periphery having a slot. The pivotal rod includes a screw hole. The elastic element includes a first end and a second end. The first end of the elastic element is fixed to the main frame. An eye bolt is coupled to the second end of the elastic element and has a threaded section extending through the slot of the outer tube and into the screw hole of the pivotal rod. The threaded section of the eye bolt slides along the slot when the pivotal rod is pivoted. Each kickstand includes a first part pivotably connected to the first end of the pivotal rod and having an open end. The first part includes a side having a slot. Each kickstand further includes a second part slideably extending through the open end of the first part. A fastener extends through the slot of the first part to releasably fix the second part relative to the first part, allowing adjustment of an overall length of the kickstand.

In another preferred embodiment, at least one of the first and second kickstands having an outwardly extending portion.

In a preferred embodiment, a pivotal seat is mounted to each of the first and second ends of the pivotal rod and includes a stop.

In another preferred embodiment, the second end of each kickstand includes a screw hole. A leg has a threaded section threadedly engaged with the screw hole of each kickstand. A nut is mounted on the threaded section of the leg, allowing adjustment of an overall length of each kickstand.

In another preferred embodiment, a tubular member fixed to at least one of the kickstand. A guide sleeve is fixed in the tubular member. A lever includes a first end in the tubular member and a second end outside of the tubular member for manual operation. The lever further includes an intermediate portion between the first and second ends and pivotably connected to the tubular member. A link includes a first end pivotably connected to the first end of the lever and a second end. A post includes an upper end pivotably connected to the second end of the link and a lower end slideably received in the guide sleeve. The post can be moved between a higher position and a lower position by pivoting the lever.

In another preferred embodiment, the main frame includes at least one recessed portion for rotatably receiving the pivotal rod.

The present invention will become clearer in light of the following detailed description of illustrative embodiments of this invention described in connection with the drawings.

### DESCRIPTION OF THE DRAWINGS

The illustrative embodiments may best be described by reference to the accompanying drawings where:
FIG. 1 shows a bottom perspective view of a kickstand device for a two-wheeled vehicle of an embodiment according to the preferred teachings of the present invention.
FIG. 2 shows an exploded, perspective view of the kickstand device of FIG. 1.
FIG. 3 is a schematic perspective view showing operation of the kickstand device of FIG. 1.
FIG. 4 shows a partial, side view illustrating use of the kickstand device of FIG. 1 on a motorcycle.
FIG. 5 shows an enlarged view of a circled portion of FIG. 4.
FIG. 6 shows a front view of a motorcycle using the kickstand device of FIG. 1.
FIG. 7 shows an exploded, perspective view of a kickstand device of another embodiment according to the preferred teachings of the present invention.
FIG. 8 shows a front view of a motorcycle using the kickstand of FIG. 7.
FIG. 9 shows an exploded, perspective view of a kickstand device of a further embodiment according to the preferred teachings of the present invention.
FIG. 10 shows an exploded, perspective view of a kickstand device of still another embodiment according to the preferred teachings of the present invention.
FIG. 11 shows a front view of a motorcycle using the kickstand device of FIG. 10.
FIG. 12 shows a partial, perspective view of a bicycle using a kickstand device of yet another embodiment according to the preferred teachings of the present invention.
FIG. 13 shows an enlarged view of a circled portion of FIG. 12.
FIG. 14 shows a partial, cross sectional view of a modified example of a kickstand of the kickstand device according to the preferred teachings of the present invention.
FIG. 15 shows a perspective view of a kickstand extension of the kickstand device according to the preferred teachings of the present invention.
FIG. 16 shows a partial, cross sectional view of the kickstand extension of FIG. 15 and a kickstand of the kickstand device according to the preferred teachings of the present invention.
FIG. 17 shows a partial, cross sectional view of a kickstand and a kickstand extension modified from the kickstand extension of FIG. 16.

All figures are drawn for ease of explanation of the basic teachings of the present invention only; the extensions of the figures with respect to number, position, relationship, and dimensions of the parts to form the preferred embodiments will be explained or will be within the skill of the art after the following teachings of the present invention have been read and understood. Further, the exact dimensions and dimensional proportions to conform to specific force, weight, strength, and similar requirements will likewise be within the skill of the art after the following teachings of the present invention have been read and understood.

### DETAILED DESCRIPTION OF THE INVENTION

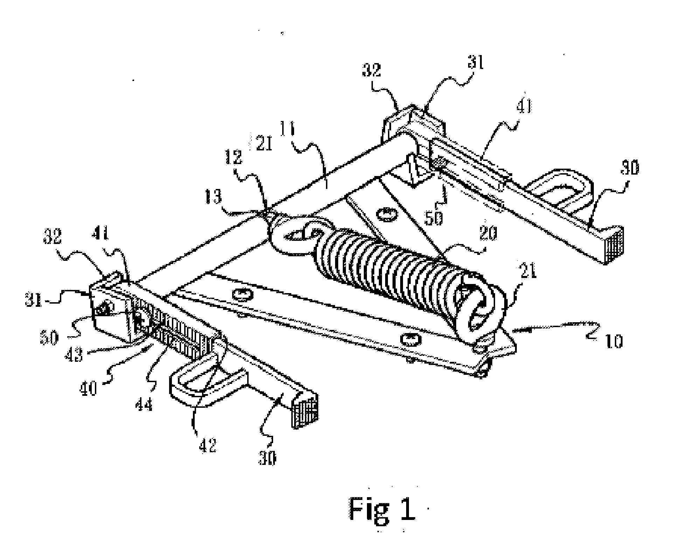

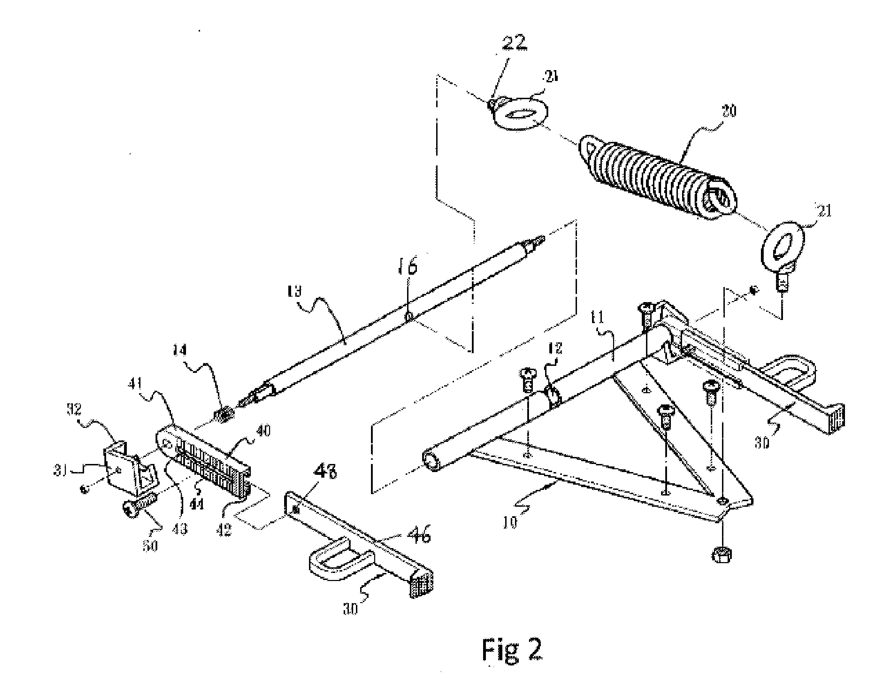

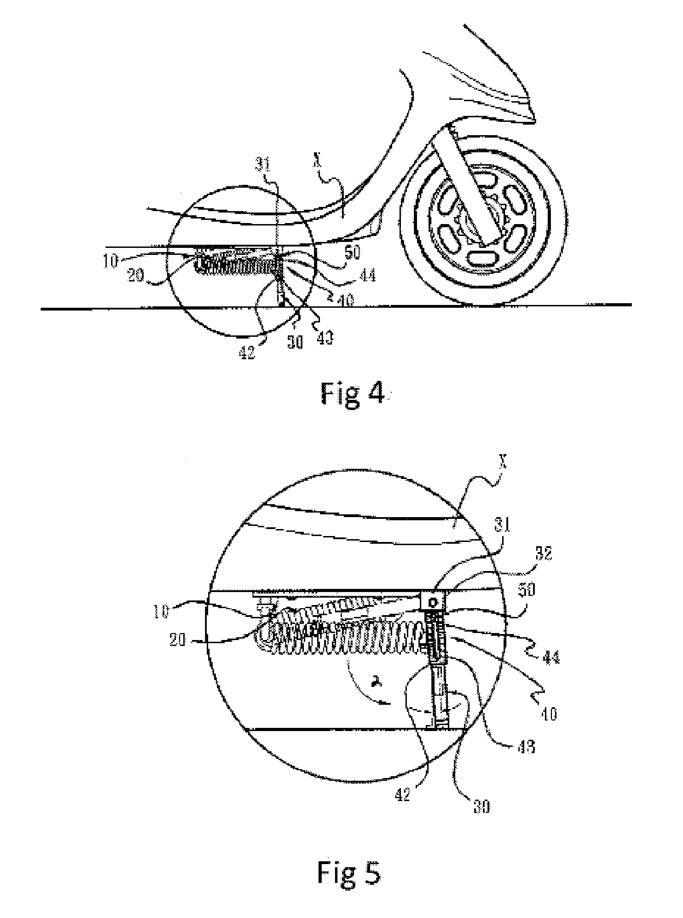

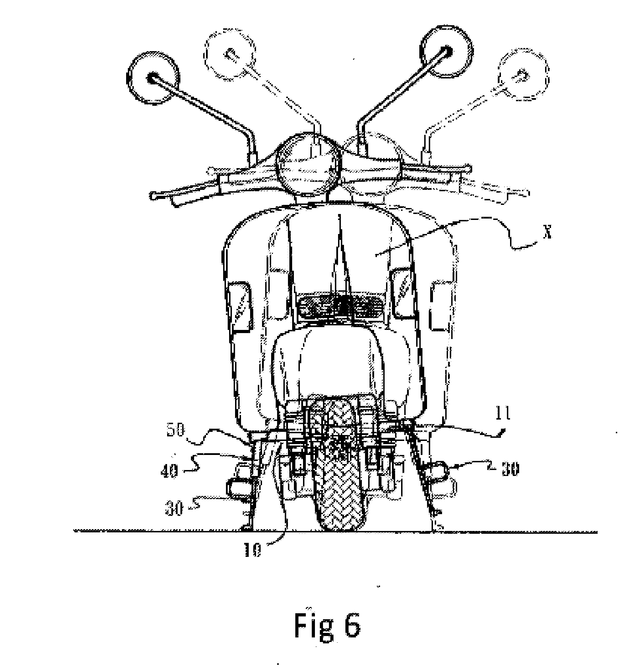

A kickstand device according to the preferred teachings of the present invention can be utilized on a two-wheeled vehicle such as a motorcycle or a bicycle. In a preferred embodiment shown in FIGS. 1-6, the kickstand device includes a main frame 10 to be mounted to a frame of the two-wheeled vehicle X (FIG. 4). An outer tube 11 is fixed to the main frame 10 and includes a slot 12 in an outer periphery thereof. The slot 12 is located in a center of the outer tube 11. A pivotal rod 13 is rotatably received in the outer tube 11 about a rotating axis and has two ends and a hole 16 in the most preferred form shown as a screw hole between the ends of the pivotal rod 13. A spring 14 is mounted around one of the ends of the pivotal rod 13. An elastic element 20 in the preferred form shown as a spring includes a first end fixed by an eye bolt 21 to the main frame 10. Another eyebolt 21 is attached to the other end of the resilient member 20 and includes a threaded section 22 extending through the slot 12 of the outer tube 11 into the hole 16 of the pivotal rod 13.

In the preferred form shown in FIGS. 1-6, a pivotal seat 31 is mounted to each end of the pivotal rod 13, and a kickstand 30 is pivotably mounted to each pivotal seat 31. Each kickstand 30 has a first end and a second end. The first ends of the kickstands are respectively mounted to the ends of the pivotal rod 13 to move therewith. The first kickstands 30 are located on opposite sides of the two-wheeled vehicle X. Specifically, each kickstand 30 includes a first part 41 in the form of a sleeve 40 pivotably connected to an end of the pivotal rod 13 and having an open end 42. The first part 41 includes a side having a slot 43. Each kickstand 30 further includes a second part 46 slideably extending through the open end 42 of the first part 41. A fastener 50 extends through a selected location of the slot 43 of the first part 41 into a screw hole 48 of second part 46 to releasably fix the second part 46 relative to the first part 41, allowing adjustment of an overall length of the kickstand 30. Thus, a spacing from the second end of the kickstand 30 to the rotating axis of the pivotal rod 13 in a direction perpendicular to the rotating axis can be adjusted. The side of the first part 41 includes a rugged section 44 for enhancing the coupling effect between the first and second parts 41 and 46 and the fastener 50 such as a butterfly bolt. Each pivotal seat 31 includes a wall or a stop 32 to limit the pivotal movement of each kickstand 30 (see angle α in FIG. 5 slightly larger than 90°). Alternatively, each kickstand 30 can include a positioning device in the form of a groove or a rib to limit the pivotal movement of each kickstand 30, or in the form of a resilient locking device when utilized on a bicycle.

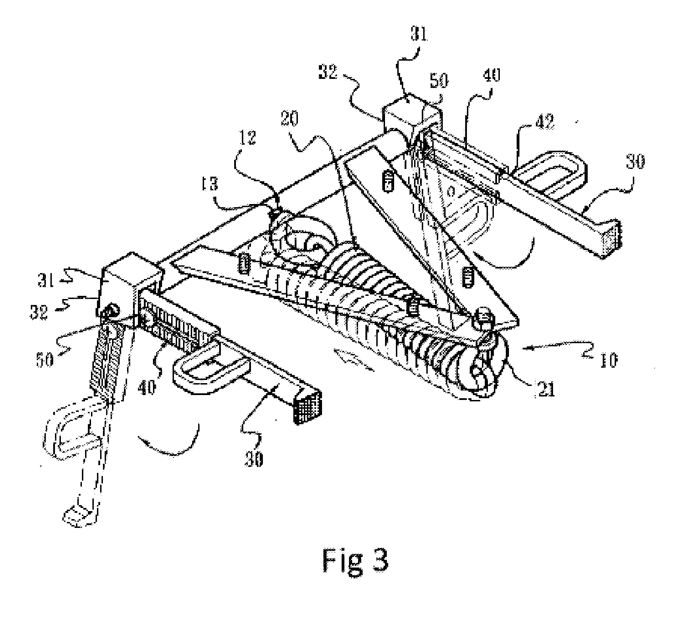

In the preferred form shown in FIGS. 1-6, the outer tube 11 serves as means for rotatably supporting the pivotal rod 13 relative to the main frame 10 and allowing the kickstands 30 to jointly pivot between a first position and a second position. The second ends of the kickstands 30 are in contact with a surface, such as the ground, on which the two-wheeled vehicle X is located when the kickstands 30 are in the first position (see phantom lines in FIG. 3). The second ends of the kickstands 30 are spaced from the surface when the kickstands 30 are in the second position (see solid lines in FIG. 3). Movement of the kickstands 30 can be easily achieved by simple operation of the user. The elastic element 20 biases the kickstands 30 to the second position. The pivotal rod 13 pivots relative to the main frame 10 when the kickstands 30 pivot between the first and second positions. The threaded section 22 of the eye bolt 21 slides along the slot 12 when the pivotal rod 13 is pivoted. Since the spacing of the second end of each kickstand 30 to the rotating axis of the pivotal rod 13 is adjustable, the two-wheeled vehicle X can be stably supported on an uneven surface through easy adjustment.

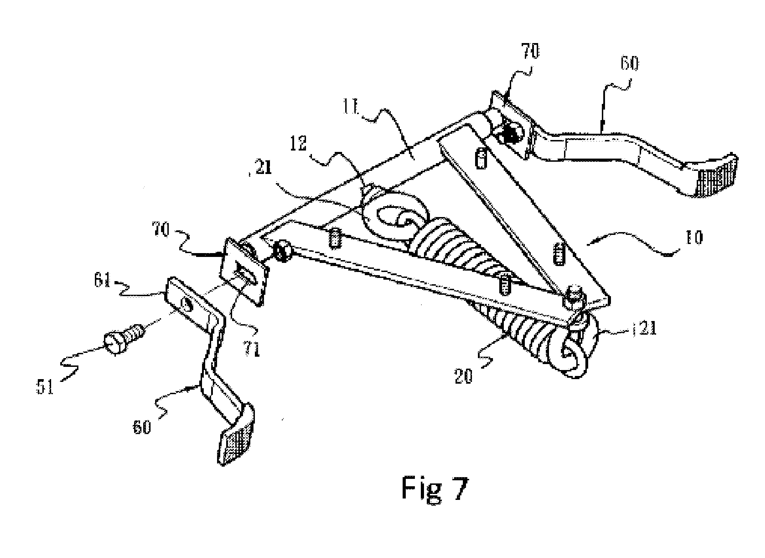

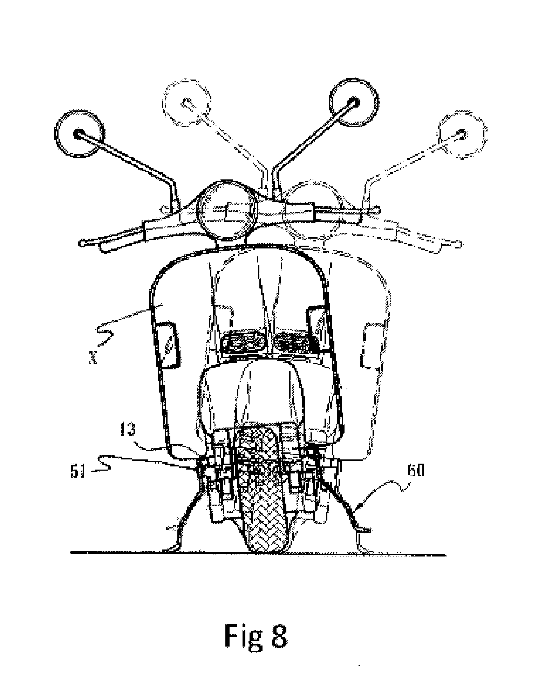

In the preferred embodiment shown in FIGS. 7 and 8, each kickstand 60 has an end 61 pivotably connected to an end of the pivotal rod 13 by a fastener 51. A connecting plate 70 is fixed to each end of the pivotal rod 13 and includes a slot 71 through which the fastener 51 is extended. Each fastener 51 can be extended through a selected location of the slot 71 of one of the connecting plates 70 to allow adjustment of the spacing of the second end of one of the kickstands 60 to the rotating axis of the pivotal rod 13. At least one of the kickstands 60 can have an outwardly extending portion to provide a stable support for the two-wheeled vehicle X.

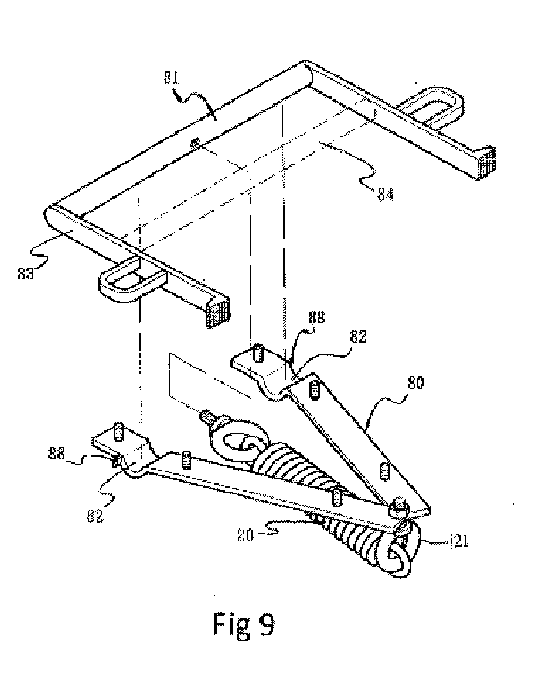

In a preferred embodiment shown in FIGS. 9, the means for rotatably supporting the pivotal rod 81 includes two recessed portions 82 formed in the main frame 80. The pivotal rod 81 is rotatably received in the recessed portions 82. A reinforcing rod 84 can be interconnected between the kickstands 83 to enhance the structural strength. Each recessed portion 82 includes a stop 88 to limit pivotal movement of the kickstand 83. Alternatively, the stops 88 can be provided on the kickstands 83 or the two-wheeled vehicle X.

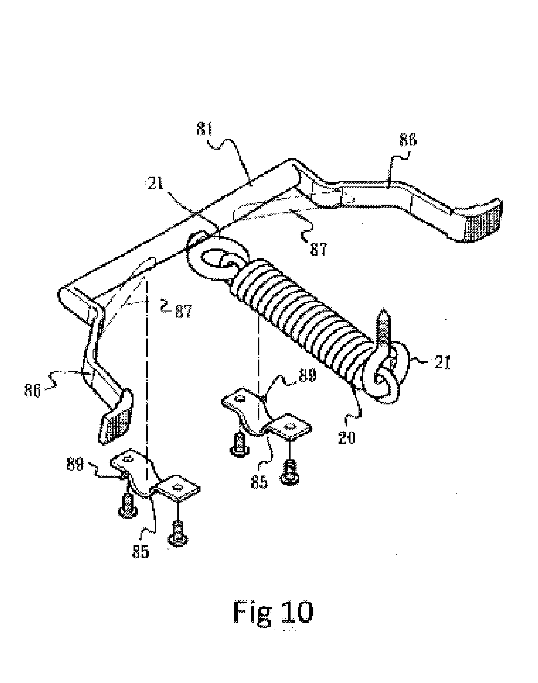

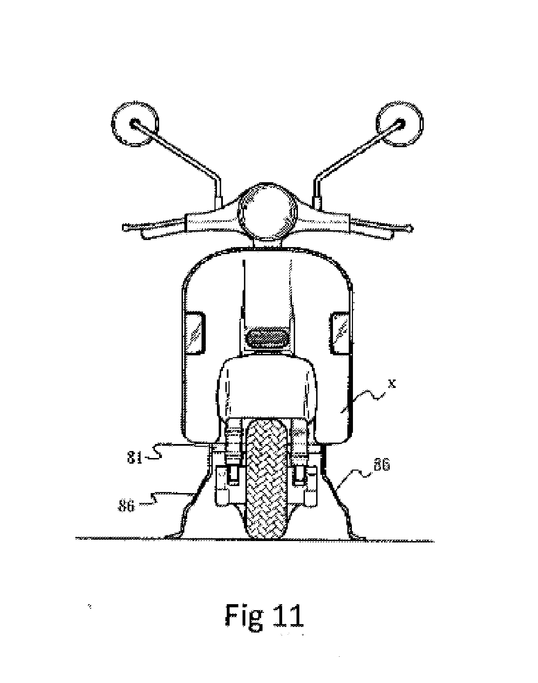

In a preferred embodiment shown in FIGS. 10-11, two brackets 85 are fixed to the frame of the two-wheeled vehicle X. Each bracket 85 includes a recessed portion 82 pivotably receiving the pivotal rod 81. The kickstands 86 are fixed to two ends of the pivotal rod 81. Each bracket 85 includes a stop 89 to limit pivotal movement of the kickstand 86. A reinforcing rod 87 can be interconnected between each kickstand 86 and the pivotal rod 81 to enhance the structural strength. Each bracket 85 can have a length in the vertical direction substantially the same as that of the frame of the two-wheeled vehicle X, providing a stable support. Alternatively, the stops 89 can be provided on the kickstands 86 or the two-wheeled vehicle X.

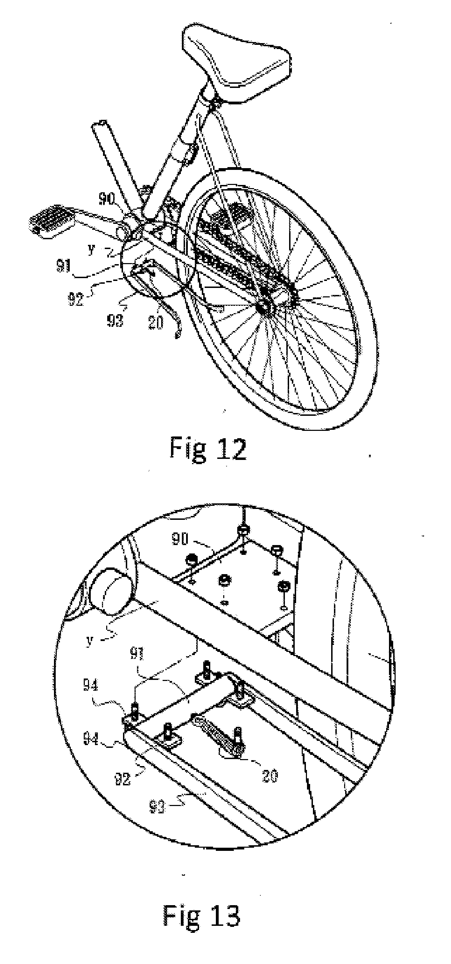

In a preferred embodiment shown in FIGS. 12-13, two brackets 92 are fixed by welding to a thick board 90 of the frame y of the two-wheeled vehicle X. Each bracket 92 includes a recessed portion rotatably receiving the pivotal rod 91. The kickstands 93 are integrally formed with two ends of the pivotal rod 91. Each bracket 92 includes a stop 94 to limit pivotal movement of the kickstand 93. Alternatively, the stops 94 can be provided on the kickstands 93 or the two-wheeled vehicle X.

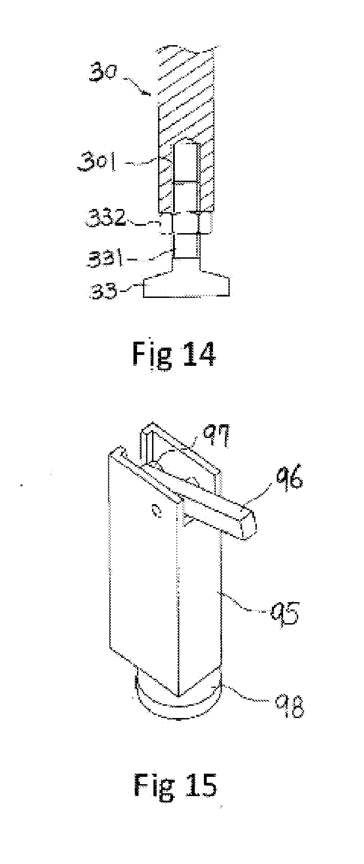

In the preferred embodiment shown in FIG. 14, the second end of at least one of the kickstands 30 can include a screw hole 301. A leg 33 includes a threaded section 331 threadedly engaged with the screw hole 301 of the kickstand 30, allowing adjustment of the overall length of the kickstand 30. A nut 332 is mounted on the threaded section 331 to perform the length adjustment. Thus, the spacing between the second end of the kickstand 30 to the rotating axis of the pivotal rod can be adjusted.

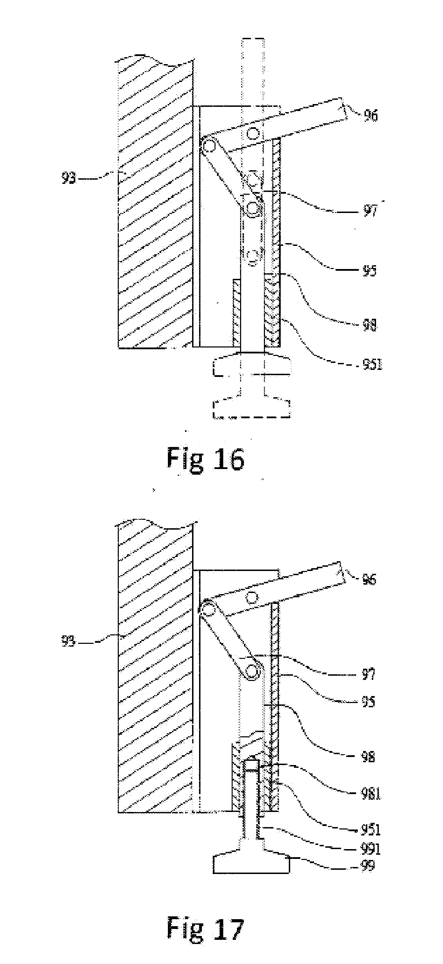

In the preferred embodiment shown in FIGS. 15 and 16, an external telescopic kickstand extension is attached to one of the kickstands 93. Specifically, the telescopic kickstand extension includes a tubular member 95 fixed to the kickstand 93. A guide sleeve 951 is fixed in a lower end of the tubular member 95. A lever 96 includes a first end in the tubular member 95 and a second end outside of the tubular member 95 for manual operation. An intermediate portion between the first and second ends of the lever 96 is pivotably connected to an inner wall of the tubular member 95. A link 97 includes a first end pivotably connected to the first end of the lever 96. A post 98 includes an upper end pivotably connected to a second end of the link 97. The post 98 further includes a lower end slideably received in the guide sleeve 951. Thus, by pivoting the lever 96, the post 98 can be moved between a higher position (see solid lines of FIG. 16) and a lower position (see phantom lines of FIG. 16). Thus, the overall length of the kickstand 93 including the kickstand extension can be adjusted. Namely, the spacing between the lower end of the post 98 to the rotating axis of the pivotal rod can be adjusted.

In a preferred form shown in FIG. 17 modified from the preferred embodiment of FIG. 16, the post 98 has a lower end having a screw hole 981, and a leg 99 having a threaded section 991 is threadedly engaged with the screw hole 981 to allow slight adjustment of the overall length of the kickstand 93 including the kickstand extension. Namely, the spacing between the lower end of the leg 99 to the rotating axis of the pivotal rod can be adjusted.

Accordingly, the kickstand devices according to the preferred teachings of the present invention provides two kickstands 30, 60, 83, 86 on opposite sides of a two-wheeled vehicle X. The kickstands 30, 60, 83, 86 or kickstands 93 having kickstand extensions can be easily operated by the user. Furthermore, each kickstand 30, 60, 83, 86 or kickstand 93 having the kickstand extension can be easily adjusted to stably support the two-wheeled vehicle X on an uneven surface.

Thus since the invention disclosed herein may be embodied in other specific forms without departing from the spirit or general characteristics thereof, some of which forms have been indicated, the embodiments described herein are to be considered in all respects illustrative and not restrictive. The scope of the invention is to be indicated by the appended claims, rather than by the foregoing description, and all changes which come within the meaning and range of equivalency of the claims are intended to be embraced therein.

## Claims

1. A kickstand device for a two-wheeled vehicle comprising:
a main frame adapted to be mounted to a frame of the two-wheeled vehicle;
a pivotal rod having first and second ends;
first and second kickstands each having a first end and a second end, with the first ends of the first and second kickstands being respectively mounted to the first and second ends of the pivotal rod to move therewith, with the first and second kickstands adapted to be located on opposite sides of the two-wheeled vehicle;
means for rotatably supporting the pivotal rod relative to the main frame and allowing the first and second kickstands to jointly pivot about a rotating axis between a first position and a second position, with the second ends of the first and second kickstands being in contact with a surface on which the two-wheeled vehicle is located when the first and second kickstands are in the first position, with the second ends of the first and second kickstands being spaced from the surface when the first and second kickstands are in the second position, with the pivotal rod pivoting relative to the main frame when the first and second kickstands pivot between the first and second positions, with the second end of at least one of the first and second kickstands having an adjustable spacing to the rotating axis of the pivotal rod in a direction perpendicular to the rotating axis; and
an elastic element biasing the first and second kickstands to the second position.

2. The kickstand device as claimed in claim 1, with the means for rotatably supporting the pivotal rod including an outer tube rotatably receiving the pivotal rod, with the outer tube including an outer periphery having a slot, with the pivotal rod including a screw hole, with the elastic element including a first end and a second end, with the first end of the elastic element fixed to the main frame, with an eye bolt coupled to the second end of the elastic element and having a threaded section extending through the slot of the outer tube and into the screw hole of the pivotal rod, and with the threaded section of the eye bolt sliding along the slot when the pivotal rod is pivoted.

3. The kickstand device as claimed in claim 1, with the first kickstand including: a first part pivotably connected to the first end of the pivotal rod and having an open end, with the first part including a side having a slot; a second part slideably extending through the open end of the first part; and a first fastener extending through the slot of the first part to releasably fix the second part relative to the first part, allowing adjustment of an overall length of the first kickstand.

4. The kickstand device as claimed in claim 3, with the second kickstand including: a third part pivotably connected to the second end of the pivotal rod and having an open end, with the third part including a side having a slot; a fourth part slideably extending through the open end of the third part; and a second fastener extending through the slot of the third part to releasably fix the fourth part relative to the third part, allowing adjustment of an overall length of the second kickstand.

5. The kickstand device as claimed in claim 1, with at least one of the first and second kickstands having an outwardly extending portion.

6. The kickstand device as claimed in claim 1, further comprising a pivotal seat mounted to each of the first and second ends of the pivotal rod, and with each of the pivotal seats including a stop.

7. The kickstand device as claimed in claim 1, with the second end of each of the first and second kickstand including a screw hole, with a leg having a threaded section threadedly engaged with the screw hole of each of the first and second kickstands, and with a nut mounted on the threaded section of the leg, allowing adjustment of an overall length of each of the first and second kickstands.

8. The kickstand device as claimed in claim 1, further comprising, in combination: a tubular member fixed to the kickstand; a guide sleeve fixed in the tubular member; a lever including a first end in the tubular member and a second end outside of the tubular member for manual operation, with the lever further including an intermediate portion between the first and second ends and pivotably connected to the tubular member; a link including a first end pivotably connected to the first end of the lever and a second end; and a post including an upper end pivotably connected to the second end of the link and a lower end slideably received in the guide sleeve, and with the post being moveable between a higher position and a lower position by pivoting the lever.

9. The kickstand device as claimed in claim 1, with the means for rotatably supporting the pivotal rod including at least one recessed portion formed in the main frame, and with said at least one recessed portion rotatably receiving the pivotal rod.
